# FASCICULE DE BREVET EUROPEEN

(11) **EP 3 112 702 B1**
(45) Date de publication et mention de la délivrance du brevet: **28.08.2019**
(21) Numéro de dépôt: 16184762.9
(22) Date de dépôt: 19.11.2014
(51) Int. Cl.: F16B 33/06

(54) **ELÉMENT DE FIXATION DE PIÈCES D'UN ASSEMBLAGE**
BEFESTIGUNGSELEMENT VON TEILEN EINER MONTAGEANORDNUNG
ELEMENT FOR ATTACHING PARTS OF AN ASSEMBLY

(30) Priorité: 25.11.2013 FR 1361603
(43) Date de publication de la demande: 04.01.2017
(62) Demande divisionnaire de: 14193919.9
(73) Titulaire: Airbus Operations, 31060 Toulouse (FR)
(72) Inventeur: MAUREL, Jean-Philippe, 31770 COLOMIERS (FR); LABAL, Frédéric, 31180 ROUFFIAC-TOLOSAN (FR); MARTRES, Jean-Luc, 31790 SAINT-JORY (FR)
(74) Mandataire: Santarelli

(56) Documents cités:
- WO-A1-2015/007957
- FR-A1- 2 855 836
- JP-A- 2009 127 777

## Description

La présente invention concerne un élément de fixation de pièces d'assemblage.

Elle concerne également un assemblage comprenant au moins deux pièces fixées l'une à l'autre par l'élément de fixation conforme à l'invention, ainsi qu'un aéronef comprenant un tel assemblage.

La présente invention s'applique de manière générale au domaine des fixations de pièces d'un assemblage, notamment pour un aéronef. Un tel assemblage doit être protégé contre les risques liés aux impacts de foudre.

L'élément de fixation est monté en interférence, et généralement en interférence modérée, dans les pièces de l'assemblage.

Il comprend une tige formée d'un fût cylindrique et d'une extrémité filetée ou non, l'extrémité coopérant lors du montage par exemple avec un écrou ou une bague de sertissage.

Lors d'un montage en interférence modérée, le fût cylindrique présente un diamètre sensiblement plus grand que l'alésage réalisé dans les pièces de l'assemblage et destiné à recevoir l'élément de fixation.

Le montage d'un tel élément de fixation dans des pièces d'un assemblage doit permettre d'assurer une bonne conductivité électrique entre l'élément de fixation et les pièces de l'assemblage.

En particulier, cette conductivité électrique doit être suffisante et compatible avec les risques liés aux impacts de foudre, notamment lorsque l'élément de fixation est destiné à un assemblage d'aéronef disposé à proximité d'une zone de carburant, par exemple au niveau de la voilure d'un aéronef.

Lorsque la conductivité électrique de l'élément de fixation utilisé n'est pas suffisante, il est nécessaire de sécuriser la fixation à l'égard de la foudre en utilisant un capuchon de protection recouvrant la partie de l'élément de fixation située du côté de l'extrémité coopérant avec un écrou ou une bague de sertissage.

Un tel capuchon de protection (également appelé en terminologie anglo-saxonne *"nup cap"*) est décrit dans le document WO 2012/118855.

L'utilisation d'un capuchon de protection nécessite la fabrication et le montage de pièces supplémentaires, augmentant le temps d'installation de l'élément de fixation ainsi que le poids associé à cet élément de fixation, critique notamment dans les applications pour aéronef.

On connaît également des éléments de fixation procurant une bonne conductivité électrique grâce à l'application d'un traitement de surface de la tige, par oxydation anodique.

Toutefois, ce traitement de surface augmente les efforts d'installation requis pour le montage en interférence de l'élément de fixation dans l'alésage des pièces à assembler.

Ainsi, les éléments de fixation procurant une bonne conductivité électrique par oxydation anodique de leur surface sont difficiles à installer en interférence modérée.

Une solution est décrite dans le document FR 2 855 836. Le document divulgue un élément de fixation comprenant une tige formée d'un fût et d'une extrémité. La tige est traitée en surface par oxydation anodique et possède un revêtement lubrifiant sur tout le fût cylindrique.

Une autre solution est décrite dans le document WO 2015/007957, relevant des dispositions de l'article 54(3) CBE. Le document divulgue un élément de fixation comprenant une tige formée d'un fût et d'une extrémité. La tige est également traitée en surface par oxydation anodique.

La présente invention a pour but de résoudre au moins un des inconvénients précités.

A cet effet, la présente invention concerne un élément de fixation de pièces d'un assemblage tel que défini dans les revendications. L'élément de fixation comprend une tige formée d'un fût cylindrique et d'une extrémité, la tige étant une pièce métallique traitée au moins partiellement en surface par oxydation anodique.

La tige est revêtue sur seulement une portion du fût cylindrique d'un revêtement lubrifiant. Le revêtement lubrifiant est appliqué sur au moins une portion annulaire du fût cylindrique.

Grâce à l'association sur la tige de l'élément de fixation d'un revêtement lubrifiant et d'une portion de surface traitée par oxydation anodique, il est possible de monter par interférence un élément de fixation procurant une bonne conductivité électrique et ainsi une bonne continuité électrique avec les pièces de l'assemblage.

Un tel élément de fixation ne requiert pas l'utilisation d'un capuchon de protection pour protéger l'élément de fixation contre les risques liés aux impacts de foudre.

Selon différentes caractéristiques et modes de réalisation, qui peuvent être pris isolément ou en combinaison :
- le revêtement lubrifiant est appliqué sur une portion du fût cylindrique, l'extrémité de la tige et une zone de raccordement entre le fût cylindrique et l'extrémité de la tige ;
- le revêtement lubrifiant est appliqué sur plusieurs portions annulaires de la tige ;
- l'élément de fixation comporte deux portions annulaires du revêtement lubrifiant, une première portion annulaire étant disposée à l'extrémité du fût cylindrique et adjacente à une zone de raccordement entre le fût cylindrique et l'extrémité de la tige, et une seconde portion annulaire étant disposée à mi-longueur du fût cylindrique selon la direction longitudinale du fût cylindrique ;
- la tige est en titane ;
- la tige est traitée au moins partiellement en surface par oxydation anodique sulfurique ;
- ledit revêtement lubrifiant est un revêtement à base de résine phénolique.

Selon un second aspect, la présente invention concerne également un assemblage comprenant au moins deux pièces fixées l'une à l'autre par un élément de fixation conforme à l'invention, monté en interférence.

L'invention concerne également un aéronef comprenant au moins un tel assemblage.

Ces assemblage et aéronef présentent des caractéristiques et avantages analogues à ceux décrits précédemment en relation avec l'élément de fixation.

D'autres particularités et avantages de l'invention apparaîtront encore dans la description ci-après.

Aux dessins annexés, donnés à titre d'exemples non limitatifs :
- la figure 1A est une vue schématique en coupe longitudinale d'un élément de fixation utile à la compréhension de l'invention;
- la figure 1B est une vue schématique en coupe longitudinale selon la ligne BB à la figure 1A ;
- la figure 1C est une vue schématique en coupe transversale selon la ligne CC à la figure 1A ;
- les figures 2 et 3 sont des vues schématiques en coupe transversale d'un élément de fixation utile à la compréhension de l'invention ;
- la figure 4A est une vue schématique en coupe longitudinale d'un élément de fixation utile à la compréhension de l'invention;
- la figure 4B est une vue schématique en coupe longitudinale selon la ligne BB à la figure 4A ;
- la figure 5 est une vue schématique en coupe longitudinale d'un élément de fixation selon un mode de réalisation de l'invention;
- la figure 6 est une vue schématique en coupe longitudinale d'un élément de fixation selon un autre mode de réalisation de l'invention; et
- la figure 7 illustre partiellement un assemblage de deux pièces fixées au moyen d'un élément de fixation selon un mode de réalisation.

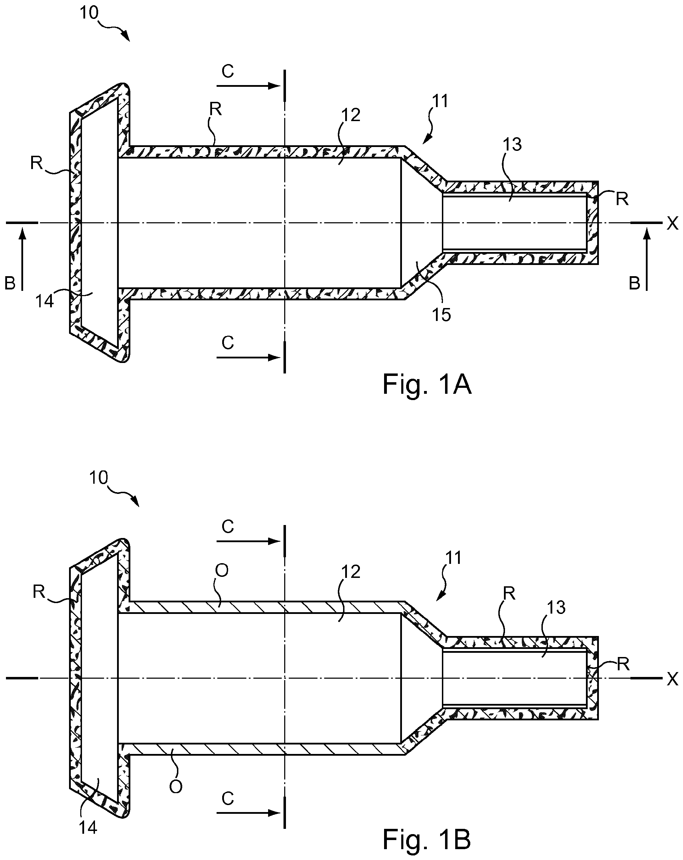

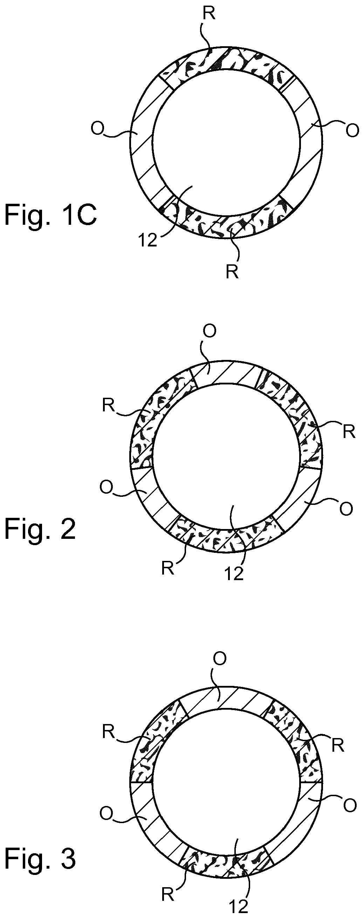

On va décrire à présent en référence aux figures 1 à 4 différents modes de réalisation d'un élément de fixation de pièces d'un assemblage utile à la compréhension de l'invention.

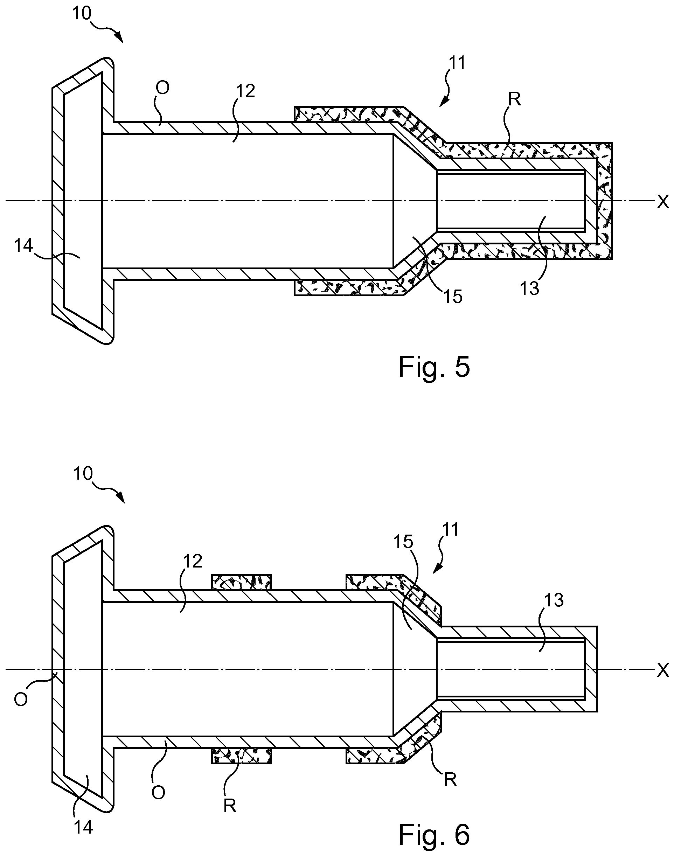

De plus, on va décrire en référence aux figures 5 et 6, l'invention, objet de la demande.

On notera qu'on a illustré sur les figures différentes couches de revêtement ou traitement de surface de l'élément de fixation, l'épaisseur des couches étant fortement exagérée comparée aux dimensions de l'élément de fixation, uniquement pour les besoins de compréhension et d'illustration de l'invention.

On va décrire tout d'abord en référence aux figures 1A, 1B et 1C, un premier mode de réalisation d'un élément de fixation des pièces d'un assemblage.

L'élément de fixation 10 comprend une tige 11 formée d'un fût cylindrique 12 et d'une extrémité 13. Ici, et de manière non limitative, l'extrémité 13 de la tige 11 est une extrémité filetée adaptée à coopérer avec un écrou (non représenté aux figures 1A, 1B et 1C).

La tige 11 est munie également d'une tête 14 située à l'extrémité opposée à l'extrémité filetée 13 de la tige 11.

Le fût cylindrique 12 est de diamètre sensiblement supérieur au diamètre de l'extrémité filetée 13 de telle sorte que la tige 11 comporte une portion tronconique 15 de raccordement entre le fût cylindrique 12 et l'extrémité 13.

L'élément de fixation 10 est une pièce métallique, et par exemple peut être réalisée en titane.

Bien entendu, d'autres matériaux métalliques peuvent être utilisés, et par exemple un alliage de nickel du type Inconel®.

L'utilisation du titane est notamment privilégiée pour ses propriétés de conductivité et de résistance à la corrosion.

Dans ce mode de réalisation, la tête 14 et l'extrémité 13 de la tige 11 sont revêtues d'un revêtement lubrifiant R.

Le fût cylindrique 12 comporte à la fois une portion revêtue d'un revêtement lubrifiant R et une portion traitée en surface par oxydation anodique O ou analogue.

Comme bien visible à la figure 1C, dans ce mode de réalisation, le fût cylindrique 12 comporte deux bandes traitées en surface par oxydation anodique O et deux bandes revêtues d'un revêtement lubrifiant R.

Ces bandes s'étendent ici dans la longueur du fût cylindrique 12, c'est-à-dire selon la direction longitudinale X de l'élément de fixation 10, tel qu'illustré aux figures 1A et 1B.

Les bandes traitées en surface par oxydation anodique O et les bandes revêtues d'un revêtement lubrifiant R s'étendent sur des secteurs angulaires à la périphérie du fût cylindrique 12.

Dans le mode de réalisation illustré à la figure 1C, les bandes traitées en surface par oxydation anodique O et les bandes revêtues d'un revêtement lubrifiant R sont réparties uniformément à la périphérie du fût cylindrique 12.

Ainsi, les deux bandes traitées en surface par oxydation anodique O s'étendent respectivement sur deux secteurs angulaires à 90° et les deux bandes revêtues du revêtement lubrifiant R s'étendent respectivement sur deux secteurs angulaires de 90°.

A titre d'exemples non limitatifs, le traitement par oxydation anodique de la tige 11 peut être un traitement par oxydation anodique sulfurique (OAS).

Un traitement par oxydation anodique procure une bonne conductivité électrique à la tige 11 et notamment au fût cylindrique 12 de l'élément de fixation 10.

Le traitement de surface par oxydation anodique d'une tige métallique est connu et n'a pas besoin d'être décrit en détail ici.

Toutefois, dans la mesure où ici seule une portion de surface du fût cylindrique 12 de la tige 11 est traitée en surface par oxydation anodique, la mise en oeuvre du procédé de traitement nécessitera l'utilisation de cache ou masque sur les parties de l'élément de fixation non soumises au traitement par oxydation anodique. L'épaisseur du traitement en surface par oxydation anodique est égale à environ 0,5 µm.

Le revêtement lubrifiant R est à titre d'exemples non limitatifs un revêtement à base de résine phénolique.

Il peut être par exemple composé d'un revêtement à base de résine phénolique incorporant des pigments anticorrosion et/ou des pigments de lubrification.

Un tel revêtement est notamment commercialisé sous la marque HI-KOTE®, et par exemple sous la dénomination HI-KOTE® 1NC.

Dans la mesure où seule une partie de l'élément de fixation 10, et notamment de la tige 11, est revêtue du revêtement lubrifiant R, celui-ci sera appliqué, par exemple par pulvérisation ou par trempage, en utilisant un cache ou masque de protection appliqué sur les portions de la tige 11 non revêtues du revêtement lubrifiant R.

L'épaisseur de ce revêtement lubrifiant R sur la tige 11 est sensiblement égale à 5 µm.

On notera que dans cet exemple de réalisation, et comme illustré notamment à la figure 1C, le fût cylindrique 12 comporte sur 50% de sa surface externe un traitement par oxydation anodique O.

Bien entendu, lorsque le fût cylindrique 12 comporte une bande traitée en surface par oxydation anodique O et une bande revêtue du revêtement lubrifiant R, la disposition des bandes longitudinales autour du fût cylindrique 12 n'est pas limitée à l'exemple de réalisation décrit précédemment.

En particulier, le fût cylindrique 12 peut ne comporter qu'une bande traitée en surface par oxydation anodique O et qu'une bande revêtue du revêtement lubrifiant R, ces bandes s'étendant ainsi sur un secteur angulaire de 180°.

Par ailleurs, dans un mode de réalisation où le fût cylindrique 12 comporte deux bandes traitées en surface par oxydation anodique O et deux bandes revêtues d'un revêtement lubrifiant R, ces bandes peuvent ne pas s'étendre sur des secteurs angulaires identiques de 90°.

Par exemple, les deux bandes revêtues d'un revêtement lubrifiant R peuvent s'étendre respectivement sur des secteurs angulaires compris entre 30 et 90°, les deux bandes traitées par oxydation anodique O s'étendant respectivement sur des secteurs angulaires compris entre 90 et 150°.

Une telle disposition permet d'assurer une bonne conductivité électrique lors du montage de l'élément de fixation 10 dans un assemblage.

Alternativement, les deux bandes revêtues d'un revêtement lubrifiant R peuvent s'étendre respectivement sur des secteurs angulaires compris entre 90 et 150°, les deux bandes traitées par oxydation anodique O s'étendant respectivement sur des secteurs angulaires compris entre 30 et 90°.

Une telle disposition peut alors favoriser le montage en interférence modérée de l'élément de fixation 10.

Par ailleurs, le nombre de bandes traitées par oxydation anodique O et le nombre de bandes revêtues du revêtement lubrifiant R n'est pas limité à deux mais peut être supérieur, et notamment égal à trois ou quatre.

On a illustré par exemple aux figures 2 et 3 des modes de réalisation alternatifs.

A la figure 2, le fût cylindrique 12 comporte trois bandes traitées par oxydation anodique O s'étendant respectivement sur des secteurs angulaires de 45° et séparées deux à deux par des bandes revêtues d'un revêtement lubrifiant R s'étendant respectivement sur des secteurs angulaires de 75°.

Dans un autre mode de réalisation tel qu'illustré à la figure 3, le fût cylindrique 12 comporte également trois bandes traitées en surface par oxydation anodique O et trois bandes revêtues d'un revêtement lubrifiant R. Dans ce mode de réalisation, les bandes longitudinales sont réparties uniformément à la périphérie du fût cylindrique 12, s'étendant respectivement sur des secteurs angulaires de 60°.

Bien entendu, ces exemples de réalisation ne sont nullement limitatifs en termes de répartition et dimensions des secteurs angulaires à la périphérie du fût cylindrique 12 de l'élément de fixation 10.

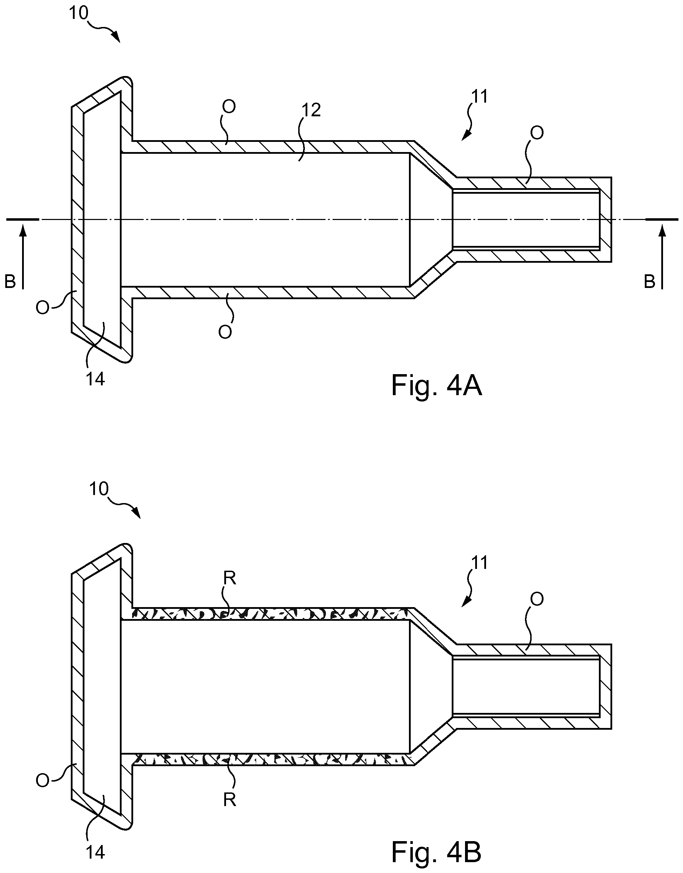

On va décrire à présent en référence aux figures 4A et 4B un second mode de réalisation de l'invention.

L'élément de fixation 10 présente des parties analogues à celles décrites précédemment en référence aux figures 1A et 1B, portant les mêmes références numériques.

Dans ce deuxième mode de réalisation, la tête 14 et l'extrémité 13 de la tige 11 de l'élément de fixation 10 sont traitées en surface par oxydation anodique O.

Le fût cylindrique 12 comporte une portion traitée en surface par oxydation anodique O et une portion revêtue d'un revêtement lubrifiant R.

Le traitement en surface de l'élément de fixation peut être un traitement par oxydation anodique sulfurique (OAS).

Le revêtement lubrifiant peut être un revêtement en HI-KOTE®.

La disposition en bandes longitudinales des portions de fût cylindrique 12 traitées par oxydation anodique O et des portions de fût cylindrique 12 revêtues du revêtement lubrifiant R peut être similaire à celle décrite précédemment en référence aux figures 1A, 1B, 1C, 2 et 3.

On a illustré enfin aux figures 5 et 6 d'autres modes de réalisation de l'élément de fixation 10 dans lesquels un revêtement lubrifiant R est appliqué sur une portion annulaire du fût cylindrique 12.

Dans les modes de réalisation illustrés aux figures 5 et 6, l'élément de fixation 10 comprend une tige 11 et une tête 14 traitées en surface intégralement par oxydation anodique O.

La tige 11 est alors revêtue sur au moins une portion du fût cylindrique 12 d'un revêtement lubrifiant R.

Dans l'exemple de réalisation décrit à la figure 5, le revêtement lubrifiant R est appliqué à la fois sur une portion du fût cylindrique 12, l'extrémité 13 et la zone de raccordement 15 de la tige 11.

Il est nécessaire toutefois de prévoir une partie suffisante du fût cylindrique 12 présentant en surface le traitement par oxydation anodique O afin d'assurer une continuité électrique suffisante avec les pièces de l'assemblage.

Selon un mode de réalisation alternatif décrit à la figure 6, le revêtement lubrifiant R est appliqué selon plusieurs bandes annulaires sur la tige 11 de l'élément de fixation 10.

De manière nullement limitative, à la figure 6, l'élément de fixation 10 comporte deux portions annulaires d'un revêtement lubrifiant R, l'une disposée à l'extrémité du fût cylindrique 12, adjacente à la zone de raccordement 15 et l'autre disposée à mi-longueur du fût cylindrique 12 selon la direction longitudinale X du fût cylindrique 12.

Bien entendu, le nombre de portions annulaires et leur disposition relative selon la direction longitudinale X de l'élément de fixation 10 peuvent être variables.

Le traitement en surface de l'élément de fixation peut être un traitement par oxydation anodique sulfurique.

Le revêtement lubrifiant peut être un revêtement en HI-KOTE®.

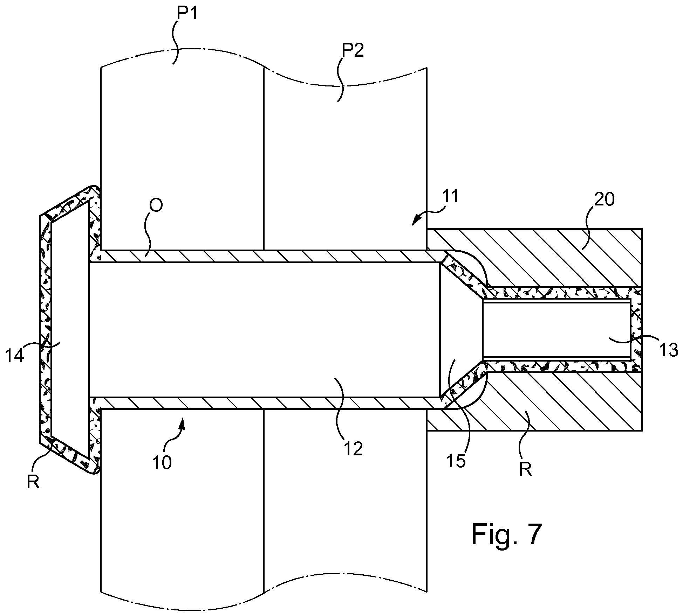

L'élément de fixation 10 ainsi décrit selon différents modes de réalisation permet de fixer l'une à l'autre au moins deux pièces P1, P2, telles qu'illustrées à la figure 7 dans un assemblage.

Cet assemblage de deux pièces P1, P2 peut correspondre à des panneaux de jonction d'un aéronef.

Les pièces empilées constituant l'assemblage sont de préférence en matériau composite, réalisé à partir d'un mélange de fibres et résine.

Dans un exemple de réalisation, le matériau composite peut être réalisé à partir d'une matrice en aluminium renforcée en fibres de carbone.

Lorsque l'extrémité 13 de l'élément de fixation 10 est filetée, l'élément de fixation 10 coopère de manière connue avec un écrou 20 monté sur l'extrémité filetée 13.

L'écrou 20 vient en contact avec l'une des pièces P1, P2 de l'assemblage, et ici la dernière pièce P2 de l'assemblage.

Bien entendu, dans d'autres modes de réalisation, lorsque l'extrémité 13 de la tige 11 n'est pas filetée, l'élément de fixation 10 est monté selon un principe d'agrafe, en utilisant une fixation de cisaillement sertie.

Lors du montage par interférence d'un élément de fixation 10, les portions du fût cylindrique 12 revêtues d'un revêtement lubrifiant R permettent de favoriser le glissement et ainsi le montage en interférence modérée de l'élément de fixation 10 dans un alésage prévu à cet effet dans les pièces P1, P2 de l'assemblage.

Par ailleurs, les portions de surface traitées par oxydation anodique assurent la continuité électrique entre l'élément de fixation 10 et les pièces P1, P2, assurant ainsi la protection de l'assemblage contre des phénomènes liés aux impacts de foudre notamment au niveau de la tête 14 de l'élément de fixation 10.

Afin d'obtenir une bonne conductivité électrique entre l'élément de fixation 10 et les pièces P1, P2 de l'assemblage, il est souhaitable que la surface occupée par le revêtement lubrifiant R sur la portion de tige 11 logée dans la dernière pièce d'assemblage, et ici la pièce P2, ne dépasse pas 50% de la surface interne de l'alésage réalisé dans la dernière pièce P2.

Ainsi, lorsque le revêtement lubrifiant R est disposé annulairement sur la tige 11 de l'élément de fixation 10, la largeur du revêtement lubrifiant R selon la direction longitudinale X de l'élément de fixation 10 est inférieure ou égale à la moitié de l'épaisseur de la dernière pièce P2 d'assemblage, mesurée également selon la direction longitudinale X de l'élément de fixation 10.

Lorsque le revêtement lubrifiant R s'étend selon une ou plusieurs bandes dans la longueur du fût cylindrique 12 de l'élément de fixation 10, la surface cumulée des bandes de revêtement lubrifiant R est inférieure ou égale à 50% de la partie annulaire du fût cylindrique 12.

Bien entendu, la présente invention n'est pas limitée aux exemples de réalisation décrits précédemment.

## Revendications

1. Elément de fixation de pièces (P1, P2) d'un assemblage, comprenant une tige (11) formée d'un fût cylindrique (12) et d'une extrémité (13), la tige (11) étant une pièce métallique traitée au moins partiellement en surface par oxydation anodique (O), et étant revêtue sur au moins une portion du fût cylindrique (12) d'un revêtement lubrifiant (R), ledit revêtement lubrifiant (R) étant appliqué sur seulement une partie du fût cylindrique (12) et ledit revêtement lubrifiant étant appliqué sur au moins une portion annulaire s'étendant sur toute la circonférence du fût cylindrique (12).

2. Elément de fixation conforme à la revendication 1, **caractérisé en ce que** le revêtement lubrifiant (R) est appliqué sur une portion du fût cylindrique (12), l'extrémité (13) de la tige (11) et une zone de raccordement (15) entre le fût cylindrique (12) et l'extrémité (13) de la tige.

3. Elément de fixation conforme à la revendication 1, **caractérisé en ce que** le revêtement lubrifiant (R) est appliqué sur plusieurs portions annulaires de ladite tige (11).

4. Elément de fixation conforme à la revendication 3, **caractérisé en ce qu'**il comporte deux portions annulaires dudit revêtement lubrifiant (R), une première portion annulaire étant disposée à l'extrémité du fût cylindrique (12) et adjacente à une zone de raccordement (15) entre le fût cylindrique (12) et l'extrémité (13) de la tige, et une seconde portion annulaire étant disposée à mi-longueur du fût cylindrique (12) selon la direction longitudinale (X) du fût cylindrique (12).

5. Elément de fixation conforme à l'une des revendications 1 à 4, **caractérisé en ce que** la tige (11) est traitée au moins partiellement en surface par oxydation anodique sulfurique.

6. Elément de fixation conforme à l'une des revendications 1 à 5, **caractérisé en ce que** ledit revêtement lubrifiant (R) est un revêtement à base de résine phénolique.

7. Assemblage comprenant au moins deux pièces (P1, P2) fixées l'une à l'autre par un élément de fixation (10) monté en interférence, **caractérisé en ce que** ledit élément de fixation (10) est conforme à l'une des revendications précédentes.

8. Assemblage conforme à la revendication 7, comprenant au moins une première pièce (P1) et une dernière pièce (P2) fixées l'une à l'autre par ledit élément de fixation (10) monté en interférence et par un écrou (20), ledit élément de fixation (10) comportant une tête (14) et une extrémité (13) filetée, **caractérisé en ce que** ledit écrou (20) est en contact avec ladite dernière pièce (P2) et coopère avec ladite extrémité filetée (13) dudit élément de fixation (10), la largeur dudit revêtement lubrifiant (R) selon la direction longitudinale (X) dudit élément de fixation (10) étant inférieure ou égale à la moitié de l'épaisseur de ladite dernière pièce (P2), mesurée également selon la direction longitudinale (X) dudit élément de fixation (10).

9. Aéronef comprenant au moins un assemblage selon l'une des revendications 7 ou 8.

## Patentansprüche

1. Element zur Befestigung von Teilen (P1, P2) einer Baugruppe, aufweisend eine Stange (11), welche von einem zylindrischen Schaft (12) und einem Ende (13) gebildet wird, wobei die Stange (11) ein Metallteil ist, welches zumindest teilweise durch anodische Oxidation (O) oberflächenbehandelt, und über zumindest einen Abschnitt des zylindrischen Schafts (12) mit einer gleitfähigen Beschichtung (R) beschichtet ist, wobei die gleitfähige Beschichtung (R) auf nur einem Teil des zylindrischen Schafts (12) aufgebracht ist und die gleitfähige Beschichtung auf zumindest einem ringförmigen Abschnitt aufgebracht ist, welcher sich über den gesamten Umfang des zylindrischen Schafts (12) erstreckt.

2. Befestigungselement nach Anspruch 1, **dadurch gekennzeichnet, dass** die gleitfähige Beschichtung (R) auf einem Abschnitt des zylindrischen Schafts (12), dem Ende (13) der Stange (11) und einem Anschlussbereich (15) zwischen dem zylindrischen Schaft (12) und dem Ende (13) der Stange aufgebracht ist.

3. Befestigungselement nach Anspruch 1, **dadurch gekennzeichnet, dass** die gleitfähige Beschichtung (R) auf mehreren ringförmigen Abschnitten der Stange (11) aufgebracht ist.

4. Befestigungselement nach Anspruch 3, **dadurch gekennzeichnet, dass** es zwei ringförmige Abschnitte der gleitfähigen Beschichtung (R) umfasst, wobei ein erster ringförmiger Abschnitt an dem Ende des zylindrischen Schafts (12) und angrenzend an einen Anschlussbereich (15) zwischen dem zylindrischen Schaft (12) und dem Ende (13) der Stange angeordnet ist, und wobei ein zweiter ringförmiger Abschnitt auf mittlerer Länge des zylindrischen Schafts (12) gemäß der longitudinalen Richtung (X) des zylindrischen Schafts (12) angeordnet ist.

5. Befestigungselement nach einem der Ansprüche 1 bis 4, **dadurch gekennzeichnet, dass** die Stange (11) zumindest teilweise durch schwefelige, anodische Oxidation oberflächenbehandelt ist.

6. Befestigungselement nach einem der Ansprüche 1 bis 5, **dadurch gekennzeichnet, dass** die gleitfähige Beschichtung (R) eine auf Phenolharz basierende Beschichtung ist.

7. Baugruppe, aufweisend mindestens zwei Teile (P1, P2), welche durch ein in Interferenz montiertes Befestigungselement (10) aneinander befestigt sind, **dadurch gekennzeichnet, dass** das Befestigungselement (10) einem der vorhergehenden Ansprüche entspricht.

8. Baugruppe nach Anspruch 7, aufweisend mindestens ein erstes Teil (P1) und ein letztes Teil (P2), welche durch das Befestigungselement (10) aneinander befestigt sind, welches in Interferenz und durch eine Mutter (20) montiert ist, wobei das Befestigungselement (10) einen Kopf (14) und ein mit Gewinde versehenes Ende (13) aufweist, **dadurch gekennzeichnet, dass** die Mutter (20) in Kontakt mit dem letzten Teil (P2) ist und mit dem mit Gewinde versehenen Ende (13) des Befestigungselements (10) zusammenwirkt, wobei die Breite der gleitfähigen Beschichtung (R) gemäß der longitudinalen Richtung (X) des Befestigungselements (10) kleiner oder gleich der Hälfte der Dicke des letzten Teils (P2) ist, welche auch gemäß der longitudinalen Richtung (X) des Befestigungselements (10) gemessen ist.

9. Luftfahrzeug, aufweisend mindestens eine Baugruppe nach einem der Ansprüche 7 und 8.

## Claims

1. Fixing element for components (P1, P2) of an assembly, comprising a rod (11) which is formed by a cylindrical shaft (12) and an end (13), the rod (11) being a metal component which is at least partially surface-treated by means of anode oxidation (O), and being coated over at least a portion of the cylindrical shaft (12) with a lubricating coating (R), the said lubricating coating (R) being applied to just part of the cylindrical shaft (12) and the said lubricating coating being applied to at least one annular portion extending over the entire circumference of the cylindrical shaft (12) .

2. Fixing element according to Claim 1, **characterised in that** the lubricating coating (R) is applied to a portion of the cylindrical shaft (12), the end (13) of the rod (11) and a connecting zone (15) where the cylindrical shaft (12) meets the end (13) of the rod.

3. Fixing element according to Claim 1, **characterised in that** the lubricating coating (R) is applied to several annular portions of the said rod (11).

4. Fixing element according Claim 3, **characterised in that** it comprises two annular portions of the said lubricating coating (R), a first annular portion being positioned at the end of the cylindrical shaft (12) and adjacent to a connecting zone (15) where the cylindrical shaft (12) meets the end (13) of the rod, and a second annular portion being positioned mid-way along the length of the cylindrical shaft (12) in the longitudinal direction (X) of the cylindrical shaft (12).

5. Fixing element according to any one of Claims 1 to 4, **characterised in that** the rod (11) is at least partially surface-treated by means of sulphuric anode oxidation.

6. Fixing element according to any one of Claims 1 to 5, **characterised in that** the lubricating coating (R) is a coating based on phenolic resin.

7. Assembly comprising at least two components (P1, P2) which are fixed to each other by means of a fixing element (10) which is mounted with interference, **characterised in that** the fixing element (10) is in accordance with any one of the preceding claims.

8. Assembly according to Claim 7, comprising at least a first component (P1) and a second component (P2) which are fixed to each other by the said fixing element (10) mounted with interference and by a nut (20), the said fixing element (10) comprising a head (14) and a threaded end (13), **characterised in that** the said nut (20) is in contact with the last component (P2) and collaborates with the said threaded end (13) of the said fixing element (10), the width of the said lubricating coating (R) in the longitudinal direction (X) of the said fixing element (10) being less than or equal to half the thickness of the said last component (P2), likewise measured in the longitudinal direction (X) of the said fixing element (10) .

9. Aircraft comprising at least one assembly according to either of Claims 7 and 8.
